# EUROPEAN PATENT SPECIFICATION

(11) **EP 1 671 047 B1**
(45) Date of publication and mention of the grant of the patent: **02.09.2009**
(21) Application number: 04768783.5
(22) Date of filing: 07.10.2004
(51) Int. Cl.: F16F 1/54, B63H 21/30

(54) **VIBRATION MOUNTING**
SCHWINGUNGSDÄMPFUNGSHALTERUNG
SUPPORT ANTIVIBRATOIRE

(30) Priority: 09.10.2003 GB 0323611
(43) Date of publication of application: 21.06.2006
(73) Proprietor: Trelleborg AB (publ), 231 11 Trelleborg (SE)
(72) Inventor: Cook, Paul, Trelleborg Industrial AVS, Leicester LE4 2BN (GB)
(74) Representative: Somervell, Thomas Richard
(86) International application number: PCT/GB2004/004249
(87) International publication number: WO 2005/036015

(56) References cited:
- DE-B- 10 249 387
- GB-A- 591 730
- GB-A- 805 325
- GB-A- 812 666
- GB-A- 932 086
- "MARINE VIBRATIONS LIMITED BY NEW MOUNT" SHIP AND BOAT INTERNATIONAL, ROYAL INSTITUTION OF NAVAL ARCHITECTS, LONDON, GB, no. 10, December 2001 (2001-12), page 14, XP001112088 ISSN: 0037-3834

## Description

The present invention relates to a vibration mounting. In particular, but not exclusively, the present invention relates to a vibration mounting for an engine.

Vibration mountings are known in which a resilient rubber material is sandwiched between a base member secured to a foundation (e.g. a floor such as the hull of a boat or a frame), and a support member. The support member is attached to a foot or mounting point on an engine or other piece of equipment that may be subjected to vibrations. The purpose of the vibration mounting is to isolate the vibration energy of the engine and so prevent damage to the engine or to equipment or personnel located nearby.

A problem with such vibration mountings arises when the vibration frequency is low, especially, for example, in two or three-cylinder marine engines. Such engines are used in smaller sea-going vessels and not only generate low frequency vibrations themselves, but are subjected to increased loadings on the mountings due to the pitching and rolling motion of the vessel. Marine engines, as with many types of engine, are now producing more power now than they ever have, giving rise to a need for a mounting that provides the required vibration isolation combined with a high thrust load capacity.

Furthermore, the engines are often mounted directly to the hull of the vessel and transmission of vibrations from the engine could result in weakening of the hull with potentially disastrous consequences. To isolate the low frequency vibrations, large displacements of the rubber material are required. Large displacements require larger volumes of rubber to ensure adequate absorption of vibration energy while maintaining reasonable service life. This means that vibration mountings of known design would have to be unacceptably large or unable to be used on existing or industry-standard mounting positions to be suitable for low frequency isolation.

A further problem is that excessively large displacements are undesirable because they may damage engine components or equipment connected to the engine such as gear trains or fuel lines. This problem is particularly severe in two and three-cylinder marine engines, when operating at maximum capacity because very high loads are transmitted in the direction of the engine thrust (longitudinal direction). Thus a higher rate of resistance to large displacements (stiffness) is required in this direction, while maintaining isolation in the vertical and/or lateral directions. This is usually achieved by fitting thrust bearings to the power output shaft of the engine, adding considerably to the installation cost.

GB932086 discloses a vibration mounting having a plurality of rubber pads of differing stiffness mounted between a base plate and a support member. The rubber pads extend outwardly at an angle from inclined surfaces of the base plate. An article entitled "Marine Vibrations Limited by New Mount" in Ship and Boat International (Royal Institution of Naval Architects, London) no. 10, December 2001 (2001-12), page 14, XP001112088 describes a vibration mounting comprising a captive rubber element within a dome-shaped protective casing and mounted on a steel baseplate.

Although it is known to use hydraulic mountings to dampen low frequency vibrations, these mountings provide inadequate isolation of higher frequency vibrations. High frequency vibrations are transmitted through the hydraulic fluid, which behaves like a solid in such conditions.

It is an object of the present invention to provide a vibration mounting which alleviates these problems.

According to the present invention there is provided a vibration mounting as defined in claim 1.

Embodiments of the invention comprise a base member for mounting to a mounting location and a support member for supporting a load, the support member being spaced apart from the base member in a load-bearing direction by a vibration isolating element of a resilient material. The vibration mounting has a centre-line in the load-bearing direction. The vibration isolating element comprises a plurality of lobes on each side of a plane passing through the centre-line. Each lobe extends from the base member towards the support member and also extends in a lateral direction different from that of other lobes. Each lobe has an upper surface engaging the support member and at least one free surface.

Preferably, the lateral direction is substantially orthogonal to the load-bearing direction.

It is an advantage that deflection of the load-bearing member towards the base member causes deformation of the lobes by a combination of shear and compression. Deformation by shear provides a lower stiffness than pure compression and allows large deflections without the need for an excessive quantity of material. It is a further advantage that the lobes provide an increased free surface area for allowing lateral expansion of the rubber material when compressed, thereby further reducing the compression stiffness of the rubber element.

Preferably the lobes are arranged to extend outwardly from a central portion of the vibration isolating element secured to a raised portion of the base member, and at an angle to the base member, an outward end of each lobe engaging a corresponding portion of the support member. The corresponding portion of the support member may be an end portion extending towards the base member that bears against an outer end surface of the lobe. It is an advantage that the end portions provide support for the load in the longitudinal direction, provide accurate control of stiffness, ensure that the rubber lobes are compressed in use, and substantially reduce the friction caused by relative movement between the lobes and the support member.

In a preferred embodiment, the support member comprises one or more buffer members extending towards the base member between adjacent lobes of the vibration isolating element such that the buffer member contacts a resilient material buffer secured to the base member when vibration displacements exceed a predetermined amplitude.

Preferably, the vibration isolating element comprises an elastomeric polymer formed by injection moulding to the base member. Conveniently, the resilient material buffer and the vibration isolating element are formed as an integral injection moulded unit.

It is an advantage that, for a given size of mounting, by arranging the buffers between adjacent lobes the thickness of resilient material disposed between the base member and support member can be sufficient to provide isolation of large amplitudes of vibration displacements as occur at low frequencies. For example, in embodiments of the invention, system natural frequencies as low as 6 Hz may be encountered.

In a preferred embodiment, the mounting location has a predetermined footprint and includes predetermined fastener positions within the footprint for securing the base member, the vibration mounting being sized to fit the predetermined footprint. The fastener positions may be holes for accepting mounting bolts.

The lobes are preferably arranged so as to allow access to, and not interfere with, the fastener positions.

In a preferred embodiment, the buffer member may contact the resilient material buffer when vibration displacements exceed a predetermined amplitude in a first direction.

The resilient material buffer may be provided with means for reducing friction when contacting the buffer member. The friction reducing means may be contact plates of nylon or other suitable low friction material. This prevents excessive wear or frictional heat generation when vibrations cause the contacting surfaces of the support member and the vibration isolating element to rub against one another.

In a preferred embodiment, in the first direction the vibration mounting further comprises a secondary buffer for further increasing resistance to displacement beyond a second predetermined amplitude of vibration displacement. It is an advantage that this dual buffering provides for greater control of vibration displacements and is particularly appropriate in applications such as the mounting of two or three-cylinder marine engines where increased resistance is required in a thrust direction when the engine is operating at a high capacity.

In a preferred embodiment, the vibration mounting includes further buffers for increasing resistance to displacement (stiffness rate) of the support member relative to the base member in the load-bearing direction and in a third direction beyond a threshold displacement in each direction. Preferably, the load-bearing, first and third directions are substantially mutually orthogonal directions.

It is an advantage that, in embodiments of the invention, different thresholds and stiffness rates may be provided in each direction, thereby allowing for differences in the control of vibrations in each direction. It is a further advantage that the control of displacements in each direction is provided in a single mounting.

Preferably, in the load-bearing direction the further buffer comprises a first buffer for increasing resistance to a positive displacement beyond a positive displacement threshold and a second buffer for increasing resistance to a negative displacement beyond a negative displacement threshold. The second buffer may be provided as a failsafe feature to prevent the support member and the base member becoming detached from one another in the event of a failure of the vibration isolating element.

Where the load bearing direction is the vertical direction, the positive and negative displacements being upward and downward displacements respectively, by providing different buffers for the upward and downward displacements allowance can be made for the dead weight of the load.

An embodiment of the invention will now be described with reference to the accompanying drawings, in which:
Figure 1 is a three-dimensional isometric view of a vibration mounting according to the present invention;
Figure 2 is a plan view in the direction X of part of the vibration mounting of Figure 1; and
Figure 3 is a sectional elevation in the plane A-A of the vibration mounting of Figures 1 and 2.

In marine engine applications, for example, 2 and 3 cylinder engines give rise to higher vibrations due to the difficulties of balancing the reciprocating masses in the engine. The vibrations that can also be low frequency are predominantly in the vertical direction. For the engine mounting system to be effective it must have a natural frequency below the oscillation frequency at idle speed. This means that the mounting must have low stiffness allowing a large deflection under the engine mass.

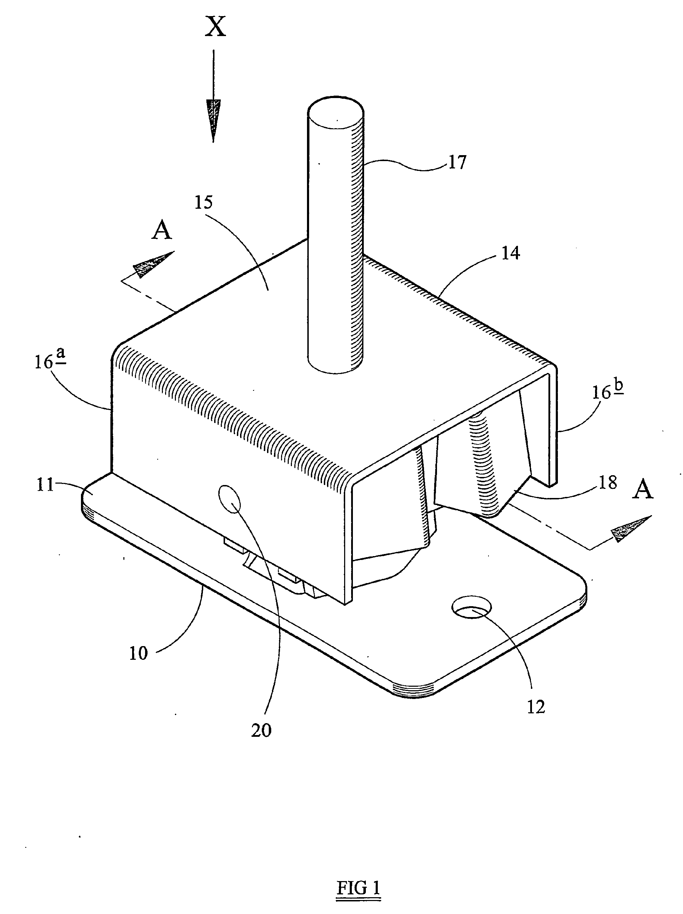

Referring to Figure 1, a vibration mounting for an engine or other piece of machinery has a base member 10 which includes a plate portion 11. Holes 12 are provided in the plate portion 11 for bolting the vibration mounting to a floor or frame (not shown). The vibration mounting has a load-bearing support member 14 having a horizontal plate portion 15 between downwardly extending side walls 16a, 16b. The support member 14 is integrally formed with, welded to, or fixed by other means to an upwardly extending stud bolt 17 located centrally of the horizontal surface 15. In use, a hole provided in a footplate of an engine or other piece of machinery (not shown), is located over the stud bolt 17 onto the horizontal plate portion 15 of the load-bearing member 14 and secured in place with a nut. The footplate of the engine may not be in direct contact with the support member 14, but may be supported between two nuts screwed onto the stud bolt 17, thereby providing a height adjusting means.

The vibration mounting shown in Figures 1 to 3 is described herein for use as a horizontal mounting, but may be used in any orientation as required. In whichever orientation the vibration mounting is used, the predominant load-bearing direction should be that equivalent to the vertical direction of Figures 1 to 3.

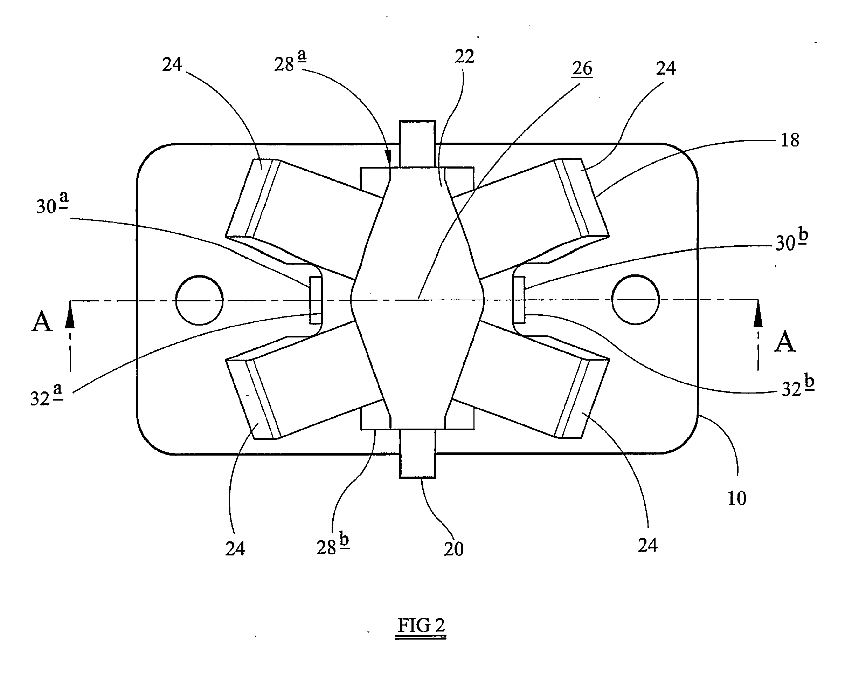

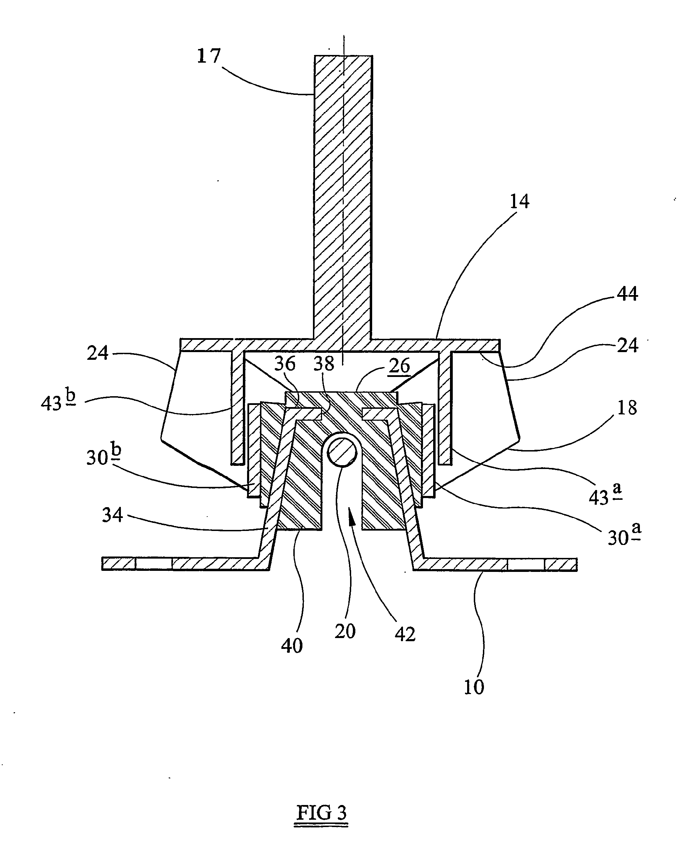

The vibration mounting has a resilient rubber vibration-absorbing element 18 between the base member 10 and the support member 14. The base member 10, support member 14 and rubber element 18 are coupled together by a pin 20, as will be seen more clearly with reference to Figures 2 and 3.

Figure 2 shows a plan view of the vibration mounting with the support member 14 of Figure 1 removed. The rubber element 18 is an injection-moulded unit, which is shaped to provide vibration isolation and control of the extents of vibration displacements between the support member 14 and the base member 10. The rubber element 18 has a central portion 22 and four lobes 24 which extend outwardly and upwardly from the central portion in an X-shape as seen in Figure 2. The central portion 22 of the rubber element 18 has an upwardly facing surface 26 and vertical surfaces 28a, 28b which face outwardly in opposing lateral directions. The central portion 22 of the rubber element 18 also carries a pair of nylon plates 30a, 30b on the vertical surfaces 32a, 32b facing outwardly in opposing longitudinal directions between respective pairs of the lobes 24. The nylon plates 30a, 30b are either fixed by adhesive to the vertical surfaces 32a, 32b, or bonded to the vertical surfaces 32a, 32b when formed by injection moulding.

The upwardly facing surface 26 is shown as a flat horizontal surface in Figures 2 and 3, but may be profiled to provide a softer buffer.

Referring to Figure 3, the base member 10 includes an upwardly extending frusto-conical portion 34 with a flat top surface 36. One or more holes 38 are provided through the base member 10 in the top surface 36. The rubber vibration-absorbing element 18 is formed by injecting the rubber from above the frusto-conical portion 34 and through the holes 38 so as to be moulded to the base member 10. The rubber element 18 includes a lower portion 40 moulded to the underside of the frusto-conical portion 34. A U-shaped channel 42 is formed through the lower portion 40, extending across it in the lateral direction.

The support member 14 is coupled to the base member 10 and rubber element 18 by inserting a pin 20 through holes in the side walls 16a, 16b (as shown in Figure 1) and through correspondingly aligned holes (not shown) in the fusto-conical portion of the base member 10. A central portion of the pin 20 rests within the curved surface of the U-shaped channel 42 in the lower portion of the rubber element 18. The upper surfaces of the lobes 24 bear against an underside 44 of the support member 14, and are compressed slightly when the vibration mounting is assembled.

Embodiments include the support member 14 having downwardly extending end portions that bear against the outer end surfaces of the lobes. This helps to provide further support for the load in the longitudinal direction. The end portions provide accurate control of stiffness, ensure that the rubber lobes are compressed, and substantially reduce the friction caused by relative movement between the rubber and the support member.

The support member 14 is further provided with a pair of downwardly extending arms 43a, 43b, which are spaced apart by an amount which is a little greater than the longitudinal separation of the outwardly facing surfaces of the nylon plates 30a, 30b, so as to leave a gap between each arm 43a, 43b and a corresponding nylon plate 30a, 30b. Similarly, the central portion 22 of the rubber element 18 is sized to have a lateral length slightly less than the lateral separation of the side walls 16a, 16b of the support member 14 so as to leave a gap between the side walls and the vertical surfaces 28a, 28b.

When an engine is mounted on the vibration mounting, the weight of the engine causes the lobes 24 to be compressed and to be deflected downwards so that the mounting plate 24 is pushed closer to the base member 10. The gap between the underside 44 of the support member 14 and the horizontal surface 26 of the central portion 22 of the rubber element 18 is reduced, while the gap between the pin 20 and the curved surface of the U-shaped channel 42 is increased. This downward displacement of the lobes does not affect the gaps between the downwardly extending arms 43a, 43b and the respective nylon plates 30a, 30b, nor the gaps between the side walls 16a, 16b and the corresponding vertical surfaces 28a, 28b.

In use the rubber lobes 24 reduce the transfer of energy from the vibrating load to the base member 10 in 3 ways: a) low stiffness allows the load to move (vibrate) with a low transfer of energy, b) by reducing the natural frequency of the system to a level below all normal running frequencies a resonance condition is avoided, and c) by energy absorption due to the damping effect of the rubber (hysteresis).

Vibration displacements of the support member 14 cause the lobes 24 to deform in compression or in shear. The free surfaces of the lobes are able to expand outwardly when so deformed and so provide a relatively low rate of energy transfer (stiffness). This means that under relatively mild vibration conditions, when vibration amplitudes are small enough for there to be no contact of the buffer surfaces, the stiffness of the rubber element 18 is relatively low. This is desirable because at low vibration frequencies, the displacement levels required to isolate the vibrations are high.

The arrangement of the lobes 24 has a further advantage in that low frequency vibration isolation can be achieved in a mounting having the same mounting bolt positions as existing, industry-standard mountings. Standard boat mountings have sub-frames that are 60mm wide and have a standard bolt hole pattern (100mm between bolt centres). The size of the mounting is very restricted by the space envelope exists, especially in small engine boats. In the embodiment described, the lobes extend outwardly away from the mounting bolt holes 12 in the plate portion 11 of the base member 10 and so are not fouled by the bolts. The mounting can therefore be secured using existing standard bolt positions.

However, when vibration levels become severe, then to prevent dangerously large vibration displacements, a higher rate of energy transfer is required. This is achieved by buffered limit control in vertical, lateral and longitudinal directions. Buffering protects the mounting as well as the engine and engine attachments (fuel lines, exhaust, propshaft, etc.) from excessive deflections.

In the lateral direction, vibration displacements greater than the size of the gap between the side walls 16a, 16b and the respective vertical surfaces 28a, 28b of the vibration-absorbing element 18, cause the gap to close. The rubber of the central portion 22 of the rubber element 18 acts as a buffer by absorbing more of the lateral vibration energy. In other words, there is an increase in the resistance to vibration displacements greater than the size of the gap. The increase in resistance depends on the material properties of the rubber as well as the thickness of rubber between the vertical surfaces 28a, 28b and the metal of the frusto-conical portion 34 of the base member 10.

A similar situation arises for the buffering of vertical displacements. However, in this case there is a difference between downward and upward displacements. For downward, or positive, displacements, the gap between the underside 44 of the support member 14 and the upwardly facing surface 26 of the rubber element 18 is closed until, for large displacements buffering occurs when contact is made. For upward, or negative, displacements, the gap between the pin 20 and the curved surface of the U-shaped channel 42 is closed until, for large displacements, buffering occurs when contact is made. The amount of buffering (the resistance to further displacement) in each case depends on the material properties of the rubber, the thickness of rubber between the contacting surface and the under or over-lying surface of the base member 10, and the area of contact. Thus a different degree of buffering can be provided for upward and downward displacements to allow for the effects of the dead weight of the engine.

In the longitudinal direction, a two-stage control of displacement is achieved. A first stage occurs when the gap between one of the downwardly extending arms 43a, 43b and the corresponding adjacent nylon plate 30a, 30b is closed. The nylon and rubber of the rubber element 18 between the nylon plate 30a, 30b and the frusto-conical portion 34 of the base member 10 acts as a first stage buffer. Greater displacement in the longitudinal direction closes the gap between the pin 20 and the side walls of the channel 42 in the lower portion 40 of the rubber element 18. This lower portion 40 acts as the second stage buffer. Again the degree of buffering depends on the relative dimensions of the contacting surfaces and the thickness and material properties of the rubber.

Two-stage buffering in the longitudinal direction means that this direction can be aligned with the primary thrust direction of the engine. Vibration displacements in the thrust direction require a greater degree of control, especially at high engine loads. Hitherto vibration isolation in this direction has required separate components such as thrust bearings to be used in addition to vibration mountings for the feet of the engine.

The nylon plates 30a, 30b are provided to reduce friction between the downwardly extending arms 43a, 43b and the buffer surface. Because vibrations can occur in all directions, when the downwardly extending arms contact the nylon plates, vibrations in directions parallel to the contacting surfaces cause the surfaces to rub against each other, and reduced friction between them reduces heat generation and wear.

Thus, a single vibration mounting may provide for vibration isolation and control in all three orthogonal directions even when the degree of control required is different in each direction.

## Claims

1. A vibration mounting comprising a base member (10) for mounting to a mounting location and a support member (14) for supporting a load, the vibration mounting having a centre-line in the load-bearing direction;
wherein the support member (14) is spaced apart from the base member (10) in the load-bearing direction by a vibration isolating element (18) of a resilient material, which comprises a plurality of lobes (24) on each side of a plane passing through said centre-line, wherein each lobe (24) extends outwardly from a central portion (22) of the vibration isolating element (18) secured to a raised portion of the base member (10), and at an angle to the base member (10) towards the support member (14) extending in a lateral direction different from that of other lobes, an outward end of each lobe (24) having an upper surface engaging a corresponding portion of the support member and at least one free surface; and
wherein the vibration mounting comprises low friction buffer means including: one or more buffer members (43a, 43b) extending from the support member (14) towards the base member between adjacent lobes (24) of the vibration isolating element (18), and a contact plate (30a, 30b) for contact between the buffer member and a resilient material secured to the base member when vibration displacements exceed a predetermined amplitude.

2. The vibration mounting of claim 1 wherein each lobe (24) extends in a lateral direction that is substantially orthogonal to the load-bearing direction.

3. The vibration mounting of claim 3, wherein the corresponding portion of the support member (14) is an end portion extending towards the base member that bears against an outer end surface of the lobe (24).

4. The vibration mounting of any preceding claim wherein the vibration isolating element (18) comprises an elastomeric polymer formed by injection moulding to the base member (10).

5. The vibration mounting of claim 5 wherein the resilient material of the buffer means and of the vibration isolating element (18) are formed as an integral injection moulded unit.

6. The vibration mounting of any preceding claim wherein the contact plate (30a, 30b) comprises nylon or other suitable low friction material.

7. The vibration mounting of any preceding claim wherein the buffer member (43a, 43b) contacts the resilient material buffer when vibration displacements exceed a predetermined amplitude in a first lateral direction.

8. The vibration mounting of claim 8 further comprising a secondary buffer (20, 42) for further increasing resistance to displacement beyond a second predetermined amplitude of vibration displacement in the first lateral direction.

9. The vibration mounting of claim 8 or claim 9, wherein the load is an engine and the first lateral direction is a longitudinal thrust direction of the engine.

10. The vibration mounting of any preceding claim including further buffer means comprising a first buffer (26, 44) for increasing resistance to a positive displacement beyond a positive displacement threshold and a second buffer (20, 42) for increasing resistance to a negative displacement beyond a negative displacement threshold.

11. The vibration mounting of claim 11 wherein the second buffer (20, 42) is provided as a failsafe feature to prevent the support member (14) and the base member (10) becoming detached from one another in the event of a failure of the vibration isolating element (18).

12. The vibration mounting of claim 11 or claim 12 wherein the further buffer means is operable for increasing resistance to displacement in the load bearing direction.

13. The vibration mounting of any one of claims 8 to 13 including a third buffer (16a, 28a, 16b, 28b) for increasing resistance to displacement of the support member relative to the base member in a third direction beyond a threshold displacement in the third direction.

14. The vibration mounting of claim 14 wherein the first, load-bearing and third directions are substantially mutually orthogonal directions.

15. The vibration mounting of any preceding claim wherein the mounting location has a predetermined footprint and includes predetermined fastener positions within the footprint for securing the base member (10), the vibration mounting being sized to fit the predetermined footprint.

16. The vibration mounting of claim 16 wherein the fastener positions are holes (12) for accepting mounting bolts.

17. The vibration mounting of claim 16 or claim 17 wherein the lobes (24) are arranged so as to allow access to, and not interfere with, the fastener positions.

## Patentansprüche

1. Schwingungshalterung, die ein Basiselement (10) zum Anbringen an einer Anbringungsposition und ein Stützelement (14) zum Stützen einer Last umfasst, wobei die Schwingungshalterung eine Mittellinie in der Lastaufnahmerichtung hat,
wobei das Stützelement (14) mit Zwischenraum in der Lastaufnahmerichtung entfernt von dem Basiselement (10) angeordnet ist, durch ein Schwingungsisolationselement (18) aus einem elastischen Material, das mehrere Flügel (24) auf jeder Seite einer Ebene, die durch die Mittellinie hindurchgeht, umfasst, wobei sich jeder Flügel (24) von einem an einem erhöhten Abschnitt des Basiselements (10) befestigten Mittelabschnitt (22) des Schwingungsisolationselements (18) aus nach außen und in einem Winkel zu dem Basiselement (10) zu dem Stützelement (14) hin erstreckt, wobei er sich in einer seitlichen Richtung, die sich von derjenigen der anderen Flügel unterscheidet, erstreckt, wobei ein äußeres Ende jedes Flügels (24) eine obere Fläche, die einen entsprechenden Abschnitt des Stützelements in Eingriff nimmt, und wenigstens eine freie Fläche hat, und
wobei die Schwingungshalterung reibungsarme Puffermittel umfasst, die Folgendes einschließen: ein oder mehrere Pufferelemente (43a, 43b), die sich von dem Stützelement (14) aus zwischen benachbarten Flügeln (24) des Schwingungsisolationselements (18) zu dem Basiselement hin erstrecken, und eine Berührungsplatte (30a, 30b) für eine Berührung zwischen dem Pufferelement und einem an dem Basiselement befestigten elastischen Material, wenn die Schwingungsverschiebung eine vorbestimmte Amplitude überschreitet.

2. Schwingungshalterung nach Anspruch 1, wobei sich jeder Flügel (24) in einer seitlichen Richtung erstreckt, die im Wesentlichen senkrecht zu der Lastaufnahmerichtung ist.

3. Schwingungshalterung nach Anspruch 2, wobei der entsprechende Abschnitt des Stützelements (14) ein sich zu dem Basiselement hin erstreckender Endabschnitt ist, der an einer äußeren Endfläche des Flügels (24) anliegt.

4. Schwingungshalterung nach einem der vorhergehenden Ansprüche, wobei das Schwingungsisolationselement (18) ein elastomeres Polymer umfasst, das durch Spritzgießen an das Basiselement (10) geformt ist.

5. Schwingungshalterung nach Anspruch 4, wobei das elastische Material des Puffermittels und des Schwingungsisolationselements (18) als eine integrale spritzgegossene Einheit geformt sind.

6. Schwingungshalterung nach einem der vorhergehenden Ansprüche, wobei die Berührungsplatte (30a, 30b) Nylon oder ein anderes geeignetes reibungsarmes Material umfasst.

7. Schwingungshalterung nach einem der vorhergehenden Ansprüche, wobei das Pufferelement (43a, 43b) den Puffer aus elastischem Material berührt, wenn die Schwingungsverschiebung eine vorbestimmte Amplitude in einer ersten seitlichen Richtung überschreitet.

8. Schwingungshalterung nach Anspruch 7, die ferner einen sekundären Puffer (20, 42) umfasst, um den Widerstand gegen eine Verschiebung über eine zweite vorbestimmte Amplitude der Schwingungsverschiebung in der ersten seitlichen Richtung hinaus weiter zu steigern.

9. Schwingungshalterung nach Anspruch 7 oder Anspruch 8, wobei die Last ein Motor ist und die erste seitliche Richtung eine Längsschubrichtung des Motors ist.

10. Schwingungshalterung nach einem der vorhergehenden Ansprüche, die weitere Puffermittel umfasst, die einen ersten Puffer (26, 44), um den Widerstand gegen eine positive Verschiebung über eine positive Verschiebungsschwelle hinaus zu steigern, und einen zweiten Puffer (20, 42), um den Widerstand gegen eine negative Verschiebung über eine negative Verschiebungsschwelle hinaus zu steigern, einschließen.

11. Schwingungshalterung nach Anspruch 10, wobei der zweite Puffer (20, 42) als ein Ausfallsichemngsmerkmal bereitgestellt wird, um zu verhindern, dass das Stützelement (14) und das Basiselement (10) in dem Fall eines Ausfalls des Schwingungsisolationselements (18) voneinander gelöst werden.

12. Schwingungshalterung nach Anspruch 10 oder Anspruch 11, wobei das weitere Puffermittel funktionsfähig ist, um den Widerstand gegen eine Verschiebung in der Lastaufnahmerichtung zu steigern.

13. Schwingungshalterung nach einem der Ansprüche 8 bis 12, die einen dritten Puffer (16a, 28a, 16b, 28b) einschließt, um den Widerstand gegen eine Verschiebung des Stützelements im Verhältnis zu dem Basiselement in einer dritten Richtung über eine Schwellenverschiebung in der dritten Richtung hinaus zu steigern.

14. Schwingungshalterung nach Anspruch 13, wobei die erste, die Lastaufnahme- und die dritte Richtung im Wesentlichen zueinander senkrechte Richtungen sind.

15. Schwingungshalterung nach einem der vorhergehenden Ansprüche, wobei die Anbringungsposition eine vorbestimmte Auflagefläche hat und vorbestimmte Befestigungselementpositionen innerhalb der Auflagefläche einschließt, um das Basiselement (10) zu befestigen, wobei die Schwingungshaltemng so bemessen ist, dass sie zu der vorbestimmten Auflagefläche passt.

16. Schwingungshalterung nach Anspruch 15, wobei die Befestigungselementpositionen Löcher (12) zum Aufnehmen von Anbringungsbolzen sind.

17. Schwingungshalterung nach Anspruch 15 oder Anspruch 16, wobei die Flügel (24) so angeordnet sind, dass sie einen Zugang zu den Befestigungselementpositionen ermöglichen und dieselben nicht überlagern.

## Revendications

1. Support antivibratoire, comprenant un élément de base (10) destiné à être monté sur un emplacement du montage, et un élément de support (14) pour supporter une charge, le support antivibratoire comportant une ligne médiane dans la direction du support de la charge ;
l'élément de support (14) étant espacé de l'élément de base (10) dans la direction du support de la charge par un élément d'isolation des vibrations (18) composé d'un matériau élastique, comprenant plusieurs lobes (24) sur chaque côté d'un plan traversant ladite ligne médiane, chaque lobe (24) s'étendant vers l'extérieur, d'une partie centrale (22) de l'élément d'isolation des vibrations (18), fixé sur une partie surélevée de l'élément de base (10) et formant un angle par rapport à l'élément de base (10), vers l'élément de support (14), s'étendant dans une direction latérale différente de celle des autres lobes, une extrémité externe de chaque lobe (24) comportant une surface supérieure s'engageant dans une partie correspondante de l'élément de support et au moins une surface libre ; et
le support antivibratoire comprenant un moyen tampon à coefficient de frottement réduit, englobant : un ou plusieurs éléments tampons (43a, 43b), s'étendant de l'élément de support (14) vers l'élément de base entre des lobes adjacents (24) de l'élément d'isolation des vibrations (18), et une plaque de contact (30a, 30b), pour établir un contact entre l'élément tampon et un matériau élastique fixé sur l'élément de base lorsque les déplacements vibratoires dépassent une amplitude prédéterminée.

2. Support antivibratoire selon la revendication 1, dans lequel chaque lobe (24) s'étend dans une direction latérale pratiquement orthogonale à la direction du support de la charge.

3. Support antivibratoire selon la revendication 2, dans lequel la partie correspondante de l'élément de support (14) est constituée par une partie d'extrémité s'étendant vers l'élément de base reposant contre une surface d'extrémité externe du lobe (24).

4. Support antivibratoire selon l'une quelconque des revendications précédentes, dans lequel l'élément d'isolation des vibrations (18) comprend un polymère élastomère formé par moulage par injection sur l'élément de base (10).

5. Support antivibratoire selon la revendication 4, dans lequel le matériau élastique du moyen tampon et de l'élément d'isolation des vibrations (18) est formé sous forme d'une unité d'une seule pièce moulée par injection.

6. Support antivibratoire selon l'une quelconque des revendications précédentes, dans lequel la plaque de contact (30a, 30b) comprend du nylon ou un autre matériau approprié à coefficient de frottement réduit.

7. Support antivibratoire selon l'une quelconque des revendications précédentes, dans lequel l'élément tampon (43a, 43b) contacte le moyen tampon en matériau élastique lorsque les déplacements vibratoires dépassent une amplitude prédéterminée dans une première direction latérale.

8. Support antivibratoire selon la revendication 7, comprenant en outre un tampon secondaire (20, 42) pour accroître davantage la résistance au déplacement au-delà d'une deuxième amplitude prédéterminée du déplacement vibratoire dans la première direction latérale.

9. Support antivibratoire selon les revendications 7 ou 8, dans lequel la charge est constituée par un moteur, la première direction latérale étant une direction de la poussée longitudinale du moteur.

10. Support antivibratoire selon l'une quelconque des revendications précédentes, englobant des premiers moyens tampons, comprenant un premier tampon (26, 44) pour accroître la résistance à un déplacement positif au-delà d'un seuil de déplacement positif, et un deuxième tampon (20, 42) pour accroître la résistance à un déplacement négatif au-delà d'un seuil de déplacement négatif.

11. Support antivibratoire selon la revendication 10, dans lequel le deuxième tampon (20, 42) a la forme d'une structure à sécurité intégrée pour empêcher un détachement de l'élément de support (14) de l'élément de base (10) en cas d'une défaillance de l'élément d'isolation des vibrations.

12. Support antivibratoire selon les revendications 10 ou 11, dans lequel le moyen tampon additionnel sert à accroître la résistance au déplacement dans la direction du support de la charge.

13. Support antivibratoire selon l'une quelconque des revendications 8 à 12, englobant un troisième tampon (16a, 28a, 16b, 28b) pour accroître la résistance au déplacement de l'élément de support par rapport à l'élément de base dans une troisième direction, au-delà d'un seuil de déplacement dans la troisième direction.

14. Support antivibratoire selon la revendication 13, dans lequel la première direction, la direction du support de la charge et la troisième direction sont des directions pratiquement orthogonales les unes aux autres.

15. Support antivibratoire selon l'une quelconque des revendications précédentes, dans lequel l'emplacement de montage comporte une empreinte prédéterminée et englobe des positions de fixation prédéterminées dans l'empreinte pour fixer l'élément de base (10), le support antivibratoire étant dimensionné de sorte à s'adapter à l'empreinte prédéterminée.

16. Support antivibratoire selon la revendication 15, dans lequel les positions de fixation sont constituées par des trous (12) destinés à recevoir des boulons de montage.

17. Support antivibratoire selon les revendications 15 ou 16, dans lequel les lobes (24) sont agencés de sorte à permettre l'accès aux positions de fixation, sans gêner celles-ci.
